# EUROPÄISCHE PATENTSCHRIFT

(11) **EP 0 763 437 B1**
(45) Veröffentlichungstag und Bekanntmachung des Hinweises auf die Patenterteilung: **11.07.2001**
(21) Anmeldenummer: 96114843.4
(22) Anmeldetag: 16.09.1996
(51) Int. Cl.: B60C 23/04

(54) **Reifendruck-Überwachungseinrichtung und Mehrfachempfänger dafür**
Tyre-pressure surveillance device and multipath receiver therefore
Dispositif de surveillance de pneumatiques et récepteur à plusieures voies

(30) Priorität: 18.09.1995 DE 19534616
(43) Veröffentlichungstag der Anmeldung: 19.03.1997
(73) Patentinhaber: ALPHA-BETA ELECTRONICS AG, 8566 Ellighausen (CH)
(72) Erfinder: Schröttle, Michael, 8566 Neuwilen (CH); Schmidiger, Willi, 6343 Buonas (CH)
(74) Vertreter: Brehm, Hans-Peter, Dr. Dipl.-Chem.

(56) Entgegenhaltungen:
- WO-A-93/16891
- WO-A-96/37374
- DE-A- 2 850 787
- DE-A- 3 104 013
- DE-A- 3 605 097
- DE-A- 3 930 479
- DE-A- 3 930 480
- DE-A- 4 205 911
- DE-A- 4 303 583
- DE-A- 4 303 591
- FR-A- 2 441 502

## Beschreibung

Die vorliegende Erfindung betrifft eine Reifendruck-Überwachungseinrichtung nach dem Oberbegriff des Anspruches 1. Weiterhin betrifft die Erfindung einen Mehrfachempfänger (Multi-path Receiver oder Diversity Receiver), insbesondere einen Vierfachempfänger bzw. Fünffachempfänger für eine solche Reifendruck-Überwachungseinrichtung. Die erfindungsgemäße Reifendruck-Überwachungseinrichtung kann an sämtlichen Land- und Luftfahrzeugen eingesetzt werden, die mit mehreren Luftreifen ausgerüstet sind. Vorzugsweise dient die erfindungsgemäße Reifendruck-Überwachungseinrichtung zur Überwachung des Drucks in den Reifen von Kraftfahrzeugen wie Pkw, Lkw und Omnibussen. Ohne darauf beschränkt zu sein, wird die erfindungsgemäße Reifendruck-Überwachungseinrichtung nachstehend in Verbindung mit einem Pkw beschrieben, der mit vier überwachten Rädern ausgerüstet ist. Wahlweise könnte zusätzlich auch der Luftdruck im Ersatzrad überwacht werden.

Eine Reifendruck-Überwachungseinrichtung dieser Art ist aus dem Dokument DE-A1-28 50 787 bekannt (siehe die FR-A1-2441 502 derselben Aumelder zum selben Gegenstand). Die dort beschriebene Alarmeinrichtung zur Überwachung des Druckes in Kraftfahrzeugreifen ordnet jedem Rad einen mit einer auslenkbaren Membran versehenen Druckfühler zu. Eine Membranauslenkung kann bei Unterschreitung oder Überschreitung eines Reifensolldruckes auftreten und unterbricht die Aussendung eines HF-Signals. Solange der überwachte Luftdruck innerhalb vorgegebener Grenzen liegt, wird intermittierend jedoch andauernd ein aus zwei Bits bestehendes Signal telemetrisch an Empfangsantennen übertragen, die nahe bei den Reifen am Kraftfahrzeugkörper angeordnet sind, so daß sich eine enge Koppelung der Antenne mit der zugeordneten Sendeeinrichtung am Rad ergibt. Diese Koppelung verbessert die Empfangsqualität und erleichtert die Identifikaiton. Beispielsweise können diese Empfangsantennen in der Nähe der Schutzbleche für die Räder angeordnet sein. Die zu übertragenden Signale können codiert werden, um den jeweiligen Sender zu identifizieren und um zusätzliche Informationen zu übertragen.

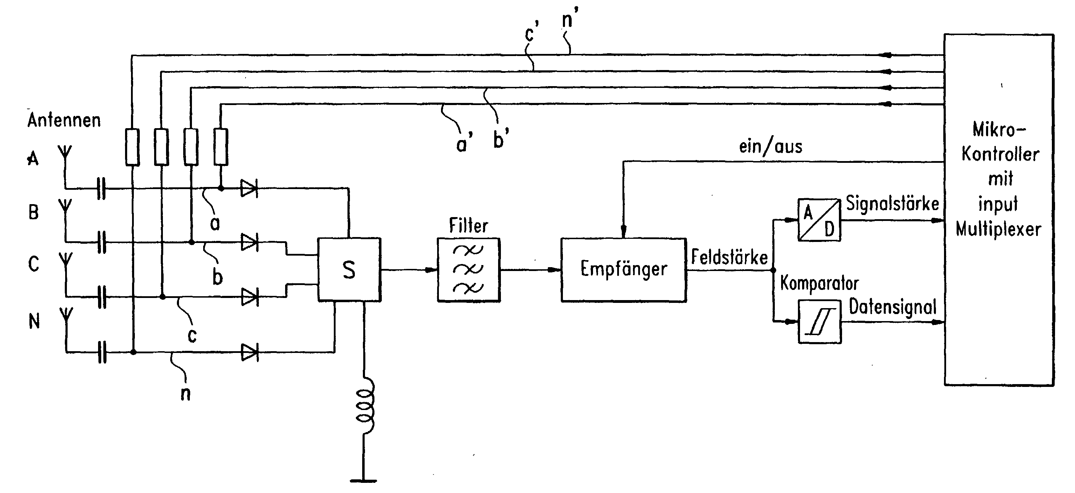

Enfernt von diesen Antennen kann eine zentrale Auswerteeinrichtung vorgesehen sein, welche die Funktelegramme auswertet und Warn- oder Alarmsignale für den Fahrzeugführer erzeugt. Hit Hilfe eines Analogschalters (vgl. die Schaltungsbilder nach Fig. 15 und 15A) können die verschiedenen Antennenausgänge einzeln abgetastet werden, wobei die Auswahl durch die Zustände eines Binarzählers in Verbindung mit einem internen Decoder ausgewählt werden. Beiden ist ein Taktgenerator zugeordnet. Die durch Multiplexen bearbeiteten Eingangssignale treten in die Auswerteeinrichtung ein und werden dort verarbeitet.

Bei dieser bekannten Reifendruck-Überwachungseinrichtung erfolgt die Koppelung zwischen einem Sender am Rad und der zugeordneten Empfangsantenne im Bereich des Radkastens am Fahrzeug allein durch die räumliche Zuordnung dieser Empfangsantenne zu dem überwachten Rad. In der Praxis hat sich allein diese Koppelung häufig als nicht ausreichend erwiesen. Der Sender befindet sich an dem sich drehenden Rad, häufig abgeschirmt durch Felge und Mantel des Luftreifens. Die Raddrehung kann ungenügende Empfangsbedingungen verursachen, beispielsweise können durch Auslöschungen und/oder Reflexionen am Ort der Empfangsantenne Signalauslöschungen auftreten. Weiterhin erfordert eine sichere Signalübermittlung von Nutzsignalen häufig eine solch hohe Signalstärke, daß das von einem Sender erzeugte Funktelegramm nicht nur von der unmittelbar benachbarten und zugeordneten Empfangsantenne aufgefangen wird, sondern auch von den anderen Empfangsantennen am Fahrzeug. Im Falle benachbart parkender Fahrzeuge können die Empfangsantennen an einem Fahrzeug auch die Funktelegramme vom benachbarten, fremden Fahrzeug empfangen.

Es sind verschiedene Vorschläge entwickelt worden, um die Koppelung zwischen Sender am rotierenden Rad und fahrzeugseitigem Empfänger zu verbessern. So kann beispielsweise für die Signalübertragung ein Abfrage-Antwort-Modus zwischen einer fahrzeugseitigen HF-Sende/ Empfangseinrichtung und den radseitigen HF-Sende/Empfangseinrichtung (en) vorgesehen sein.

So offenbart das Dokument US-A-4,376,931 ein System zur Erfassung von Druckabweichungen in Luftdruckreifen, wobei jedem Rad eine benachbart im Radkasten angeordnete Antenne der fahrzeugseitigen HF-Sende/Empfangseinrichtung zugeordnet ist. Diese Antenne sendet bei der Eigenfrequenz eines Kristallresonators der radseitigen HF-Sende/ Empfangseinrichtung. Unmittelbar nach Beendigung der Aussendung schwingt der Kirstallresonator nach und übermittelt eine Resonanzfrequenz an die räumlich zugeordnete Antenne, die das aufgefangene Signal an den Empfänger der fahrzeugseitigen HF-Sende/Empfangseinrichtung weiterleitet. Je nach Ausgestaltung dient ein Ausbleiben oder ein Auftreten der Resonatorenfrequenz als Anzeigen einer Druckabweichung.
Im Falle mehrerer Räder kann die fahrzeugseitige HF-Sende/Empfangseinrichtung die Anzahl der radseitigen HF-Sende/Empfangseinrichtungen zeitlich nacheinander abfragen. Im Falle von Zwillingsreifen kann jede radseitige HF-Sende/Empfangseinrichtung einen Kristallresonator mit unterschiedlicher Eigenfrequenz aufweisen. Diese bekannte Reifendruck-Anzeigevorrichtung arbeitet typischerweise bei einer Eigenfrequenz der Kristallresonatoren von 4 MHz.

Das Dokument US-A-5,289,160 beschreibt ein vergleichbares Reifendruck-Überwachungssystem, bei welchem die Signalübermittlung zwischen der fahrzeugseitigen HF-Sende/Empfangseinrichtung und den radseitigen HF-Sende/Empfangseinrichtungen mit Hochfrequenz (HF) im Bereich von 900 bis 945 MHz erfolgt. Die Trägerfrequenz kann mit einem binären Code moduliert sein, der eine eigene Kennung (identifying code) für jede radseitige HF-Sende/Empfangseinrichtung vorsieht. Die Zuordnung eines empfangenen Funktelegramms zum "sendenden Rad" kann über diese Kennung erfolgen. Nach einem alternativen, dort beschriebenen Verfahren (vgl. Spalte 9, Zeilfen 58 ff) kann die fahrzeugseitige HF-Sende/Empfangseinrichtung eine oder zwei radseitige HF-Sende/Empfangseinrichtung (en) im Zeitmultiplexverfahren abfragen. Selbst wenn eine bestimmte fahrzeugseitige Antenne aus einer Anzahl solcher Antennen aktiviert wird, "weiß" die Multiplexerschaltung zum Zeitpunkt der Abfrage, welche bestimmte Antenne aktiviert ist, und kann diese Selektion der fahrzeugseitigen Antenne leitungsgebunden an die zentrale Auswerteeinrichtung übermitteln. Der Abfrageschritt im Abfrage-Antwort-Modus ist eine Aktion des Senders am Fahrzeug; folglich ist die bekannte Multiplexerschaltung den fahrzeugseitigen Sendeeinrichtungen zugeordnet.

Aus den Dokumenten DE-C2-36 05 087 und US-A-5,297,424 ist beispielsweise bekannt, daß bei solchen Überwachungseinrichtungen zusätzlich zum Reifendruck auch die Reifentemperatur erfaßt und ausgewertet werden kann.

Das Dokument WO 93/16891 offenbart eine Kontrollvorrichtung für den Luftdruck von luftbereiften Fahrzeugrädern. Die Signalübermittlung erfolgt telemetrisch von jedem drehenden Rad an beispielsweise ein zentrales Empfangsgerät. Die Funktelegramme werden mit einem für das jeweilige Rad charakteristischen Identifizierungssignal versehen. Das Empfangsgerät ist mit einem Speicher versehen, in welchem diese Identifizierungssignale Rad-bezogen gespeichert sind. Beim bestimmungsgemäßen Betrieb erfolgt die Zuordnung eines am Fahrzeug empfangenen Funktelegramms zum sendenden Rad über die Identität eines telemetrisch übermittelten und empfangenen Identifizierungssignals mit dem gespeicherten Identifizierungssignal für das zugehörige Rad. Das fahrzeugseitige Empfangsgerät verarbeitet empfangene Signale nur, wenn das empfangene Identifikationssignal mit einem in dem fahrzeugseitigen Empfangssignal gespeicherten Identifikations-Vergleichssignal übereinstimmt.

Vor einer Inbetriebnahme dieser bekannten Reifendruck-Uberwachungseinrichtung muß im fahrzeugseitigen Empfangsgerät das Identifikations-Vergleichssignal generiert und gespeichert werden. Hierzu wird ein "Paarungsmodus" vorgeschlagen, der ausschließlich am stehenden Fahrzeug durchgeführt wird. Während des Paarungsmodus sendet ein bestimmtes radseitiges Sendegerät das zugehörige Identifikationssignal, und die Decodiereinrichtungen der fahrzeugseitigen Empfangsteile bwz. ein Mikroprozessor in der zentralen Auswerteeinrichtung überprüfen für jedes der vier Empfangsteile die Intensität des empfangenen Signales.

Jedes von einem Sendegerät eines Rades ausgestrahlte Signal wird demjenigen Empfangsteil zugeordnet, bei welchem es die höchste Signalintensität erzeugt. Dabei erfolgt eine Zuordnung des selektierten Empfangsteils mit höchster Signalstärke und dem zugehörigen Eingang (VL, VR, HL, HR) am Zentralgerät über gezielt vorzunehmende Steckverbindungen. Da das Fahrzeug während der Durchführung dieses Paarungsmodus steht, sind die Störungen sehr gering und damit die entsprechende Zuordnung ohne weiteres möglich.

Das nicht vorveröffentlichte Dokument EP-B1-0 828 621, das eine Priorität vom 26. Mai 1995 in Anspruch nimmt, betrifft eine Einrichtung an Fahrzeugen zur Überwachung des Luftdrucks in deren Reifen. Jedes zu überwachende Rad ist mit einem Druckmeßfühler versehen, bei welchem ein Sender angeordnet ist, welcher Signale aussendet, die den vom Druckmeßfühler ermittelten Luftdruck beinhalten. Am Chassis des Fahrzeugs sind mehrere Antennen für den Empfang dieser Signale angbracht, wobei lediglich eine Antenne benachbart zu dem zugehörigen Rad angebracht ist. Jede Antenne ist über je eine Verbindungsleitung mit einer gemeinsamen elektronischen Empfangs- und Auswerteschaltung verbunden.

Typischerweise arbeiten die Anordnungen aus Druckmeßfühler und Sensor nicht permanent, sondern werden zur Schonung der sie betreibenden Batterie nur in Zeitabständen aktiviert und senden dann ein Datentelegramm an den Empfänger. Da die an den Rädern vorgesehenen Sender nicht zueinander synchronisiert sind, ist es möglich, daß Datentelegramme von verschiedenen Rädern einander überlappen. Um dennoch eine eindeutige Reifendrucküberwachung durchführen zu können, ist vorgesehen, für jedes Signal, welches dem Empfänger zugeleitet wird, eine Feldstärkeauswertung durchzuführen. Zu diesem Zweck führt von den Verbindungsleitungen jeweils eine Zweigleitung unter Umgehung des Empfängers zum Mikrocomputer. In jeder dieser Zweigleitungen liegen hintereinander ein Gleichrichter und ein Grenzwertschalter. Der Gleichrichter bewirkt eine Gleichrichtung des abgezweigten Signalanteils. Bei ausreichender Feldstärke des Signals kann der gleichgerichtete Anteil den Grenzwertschalter passieren und gelangt auf einen Eingang des Mikrocomputers, der daraufhin HIGH gesetzt wird. Auf diese Weise kann der Mikrocomputer das ihm vom Empfänger übermittelte Signal einem bestimmten Rad zuordnen.

Nach einer alternativen Ausführungsform kann dem Empfänger für jedes Rad ein vom Mikrocomputer steuerbarer Schalter vorangestellt sein. Die von den Antennen kommenden Signale werden über die Schalter zum Empfänger mit Demodulator durchgeschaltet. Die Feldstärkeauswertung erfolgt in gleicher Weise. Erst wenn ein von einer der Verbindungsleitungen abgezweigtes und gleichgerichtetes Signal einen der Eingänge des Mikrocomputers HIGH gesetzt hat, wird der in der zugehörigen Verbindungsleitung liegende Schalter geschlossen und das von der Antenne kommende Signal auf den Empfänger durchgeschaltet. Ein weiteres, zeitlich überlappend eintreffendes Signal von einer anderen Antenne wird vom Mikrocomputer nicht auf den Empfänger durchgeschaltet und stört die Auswertung des zuerst eingetroffenen Signales nicht.

Ziel der Erfindung ist es, bei der telemetrischen Übermittlung von Funktelegrammen, die von HF-Sendeeinrichtungen an mehreren, stillstehenden oder rotierenden Rädern eines Fahrzeugs stammend und die von einer zentralen, ortsfest am Fahrzeug angeordneten Auswerteeinrichtung ausgewertet werden, die Selektion und Identifizierung des gerade "sendenden" Rades zu verbessern. Weiterhin soll die Sicherheit bei der Übertragung von Nutzsignalen solcher HF-Funktelegramme erhöht werden.

Davon ausgehend, besteht die Aufgabe (das technische Problem) der vorliegenden Erfindung darin, eine Reifendruck-Überwachungseinrichtung der gattungsgemäßen Art bereitzustellen, bei welcher sowohl die Zuordnung eines HF-Funktelegrammes zu dem gerade dieses Funktelegramm aussendenden Rad, wie die Sicherheit der Datenübertragung bei der Ubermittlung von Nutzsignalen solcher Funktelegramme verbessert ist.

Diese Aufgabe wird je durch eine Reifendruck-Überwachungseinrichtung mit der Gesamtheit der Merkmale des Anspruches 1 oder des Anspruches 2 gelöst.

Je ein Mehrfachempfänger für je eine solche Reifendruck-Überwachungseinrichtung ist durch die Merkmale des Anspruches 3 oder des Anspruches 4 gekennzeichnet.

Mit dieser Ausgestaltung der Erfindung wird ein einfach aufgebauter Mehrfachempfänger für eine erfindungsgemäße Reifendruck-Überwachungseinrichtung bereitgestellt.

Vorteilhafte Ausgestaltungen und Weiterbildungen der Erfindung ergeben sich aus den Unteransprüchen.

Die vorliegende Erfindung beschäftigt sich in erster Linie mit den empfangsseitigen Einrichtungen am Fahrzeug. Für die senderseitigen Komponenten am Rad wie Signalerzeugungseinrichtung, Sendeeinrichtung und dergleichen werden bekannte Komponenten eingesetzt. Diese senderseitigen Komponenten können sich beispielsweise an einem Reifenventil befinden, wie das in den Dokumenten DE-C2-39 30 479 oder DE-C2-43 03 583 beschrieben ist. Weiterhin können sich die senderseitigen Komponenten an einer Ventilkappe befinden, die auf das Ventilrohr eines herkömmlichen Reifenventils eines Fahrzeugreifens aufschraubbar ist wie das in den Dokumenten DE-C2-39 30 480 oder DE-C2-43 03 591 beschrieben ist. Weiterhin können diese senderseitigen Komponenten auch an der Felge eines Fahrzeugrades befestigt sein, wie das in weiteren Druckschriften beschrieben ist. Wichtig ist, daß diese senderseitigen Komponenten am sich drehenden Fahrzeugrad ein Funktelegramm in Form eines HF-Signals erzeugen, das wenigstens ein synchronisiersignal und wenigstens Nutzsignale enthält, welche die wichtigsten aktuellen Zustandsgrößen des Luftreifens angeben, also insbesondere den Reifendruck und gegebenenfalls die Reifentemperatur.

Das Funktelegramm ist typischerweise ein moduliertes HF-Signal im Megahertz-Bereich (MHz), beispielsweise können Frequenzen oberhalb 200 MHz, vorzugsweise Frequenzen um etwa 433 MHz oder um etwa 900 MHz vorgesehen werden. Weiterhin liegen die zu übertragenden Daten vorzugsweise in digitaler Form vor, und es kann eine Amplitudenmodulation oder eine Frequenzmodulation der Trägerfrequenz vorgesehen werden. Ein bevorzugtes, in digitaler Form vorliegendes Funktelegramm kann etwa 60 bis 80 Bits umfassen. Ein solches Funktelegramm enthält ein Synchronisiersignal (etwa 8 bis 16 Bits) und die Nutzsignale (etwa 4 bis 16 Bits) und kann zusätzlich eine Kennung (typischerweise 32 Bits) und eine Prüfziffer, aufweisen. Typischerweise dauert die Aussendung eines solchen Funktelegramms einige Mikrosekunden bis einige Millisekunden. Bei einer vorzugsweise eingesetzten Sendeeinrichtung dauert die Aussendung eines etwa 80 Bits umfassenden Funktelegramms etwa 5 msec.

Jedem Rad mit seiner Sendeeinrichtung ist eine Empfangsantenne zugeordnet. Diese Empfangsantenne ist benachbart zum Rad ortsfest am Fahrzeug angebracht, beispielsweise im Bereich des jeweiligen Radkastens. Diese Empfangsantenne ist in bekannter Weise zum Empfang von HF-Signalen der Radelektronik zu optimieren. Die Demodulierung d die Decodierung dieser Signale erfolgt in dem Empfänger und der Auswerteeinrichtung. Der Empfänger kann vorzugsweise für eine Empfindlichkeit von minus 100 bis minus 120 dBm ausgelegt sein.

An zentraler Stelle im Fahrzeug ist eine Empfangs- und Auswerteeinrichtung untergebracht. Diese Empfangs- und Auswerteeinrichtung kann zu einer einzigen Einheit zusammengefaßt sein und umfaßt dann den eigentlichen Empfänger, sowie eine Auswerteeinrichtung in Form eines Steuergerätes oder Mikroprozessors mit den verschiedenen Schalteinrichtungen (Decodierung) und Logikelementen. Zu diesen Schalteinrichtungen gehört auch eine Multiplexerschaltung. Diese Einheit kann beispielsweise im Kofferraum eines Fahrzeugs untergebracht sein. Von dieser Einheit können dann Leitungen zur Signalübermittung zum Armaturenbrett oder zur Schnittstelle eines Bordcomputers des Fahrzeugs führen. Nach einer alternativen Ausführungsform kann ein einziger Empfänger vorgesehen sein, der über Leitungen mit einer räumlich getrennten Auswerteeinrichtung verbunden ist.

Entsprechend einem wesentlichen Merkmal der vorliegenden Erfindung, ist sämtlichen Empfangsantennen nur ein einziger Empfänger zugeordnet. Von jeder Empfangsantenne (nachstehend kurz "Antenne") führt je eine eigene Verbindungsleitung zu dem Empfänger. Je nach Anordnung der zentralen Einheit mit dem Empfänger können diese Verbindungsleitungen eine unterschiedliche Länge aufweisen, was zu einer entsprechenden unterschiedlichen Dämpfung der über die Verbindungsleitung übertragenen Signale führen kann. In einem solchen Falle werden die gemessenen Feldstärken zusätzlich bewertet (Mikroprozessor), um solche apparativ bedingten Dämpfungen auszugleichen. Typischerweise ist es im Rahmen der Erfindung nicht erforderlich, auf dem Weg von der Antenne zum Empfänger einen Verstärker vorzusehen.

In jede Verbindungsleitung ist ein Schalter eingesetzt. Im Hinblick auf die typischerweise auftretenden Schaltzeiten kleiner 1 µsec sind als Schalter vorzugsweise Dioden oder Transistoren vorgesehen. Jeder Schalter wird von der Multiplexerschaltung im Zeitmultiplexverfahren angesteuert und so in einen Sperrzustand oder in einen Durchlaßzustand versetzt.

Multiplexerschaltungen sind in der Fachwelt bekannt und müssen hier nicht im einzelnen beschrieben werden. Eine für die vorliegende Erfindung besonders geeignete Multiplexerschaltung umfaßt typischerweise einen Mikroprozessor, um diese Schalter in geeigneter Weise anzusteuern- Im Gegensatz zu bekannten Multiplexerschaltungen, die pro Zeiteinheit typischerweise nur einen einzigen Schalter in den Durchlaßzustand versetzen, ist im Rahmen der vorliegenden Erfindung vorzugsweise eine solche Multiplexerschaltung vorgesehen, die gleichzeitig mehrere Schalter oder alle Schalter in den Durchlaßzustand versetzen kann.

Grundsätzlich gibt es verschiedene Möglichkeiten, die jeweils an einer Antenne anliegende Feldstärke abzutasten und zu registrieren, um diejenige Antenne mit der größten Feldstärke zu selektieren. Beispielsweise kann hierzu jede Antenne der Reihe nach im Zeitmultiplexverfahren abgefragt werden und die jeweils anliegende Feldstärke ermittelt, gespeichert und untereinander abgeglichen werden, um diejenige Antenne zu ermitteln, an welcher die größte Feldstärke anliegt. Die Erfindung ist hier nicht auf ein bestimmtes Verfahren zur Ermittlung der Antenne mit der größten Feldstärke beschränkt.

Erfindungsgemäß sind zwei verschiedene Möglichkeiten vorgesehen, um diejenige Antenne zu selektieren, an der zu einem gegebenen Zeitpunkt während der Aussendung eines Funktelegrammes die größte Feldstärke anliegt.

Nach der einen Alternative erfolgt durch Auswertung der vom Empfänger erfaßten Feldstärken eine Selektion derjenigen Antenne mit der größten Feldstärke in einer Weise, bei der die Multiplexerschaltung
- vor Eintreffen eines Funktelegrammes mehrere Schalter oder alle Schalter in den Durchlaßzustand versetzt;
- anschließend nach dem Eintreffen eines Funktelegrammes und während der Auswertung dessen Synchronisiersignales fortlaufend je einen Schalter in den Sperrzustand versetzt, bis die Antenne mit der größten Feldstärke ermittelt ist; und
- daraufhin während des Empfangs des Nutzsignales dieses Funktelegrammes mehrere Schalter oder alle Schalter in den Durchlaßzustand versetzt, um so einen Mehrfachempfang dieses Nutzsignales über mehrere Antennen (A, B, C, ... N) zu erzielen:

Anhand der so selektierten Antenne wird das Funktelegramm einem bestimmten Rad zugeordnet, das sich benachbart zur selektierten Antenne befindet.

Nach der anderen Alternative erfolgt durch Auswertung der vom Empfänger erfaßten Feldstärken eine Selektion derjenigen Antenne mit der größten Feldstärke in einer Weise, bei der die Multiplexerschaltung
- während der Übertragung eines Synchronisiersignales eines Funktelegrammes nacheinander nur jeweils einen einzigen Schalter oder nur zwei Schalter in den Durchlaßzustand versetzt, bis die Antenne mit dem stärksten HF-Signal ermittelt ist; und
- während des Empfangs des Nutzsignales dieses Funktelegrammes mehrere Schalter oder alle Schalter in den Durchlaßzustand versetzt, um so einen Mehrfachempfang dieses Nutzsignales über mehrere Antennen zu erreichen.

Anhand der so selektierten Antenne wird das Funktelegramm einem bestimmten Rad zugeordnet, das sich benachbart zur selektierten Antenne befindet.

Vorzugsweise wird ein Aufsummierverfahren angewandt, bei dem gleichzeitig zwei verschiedene Antennen auf einen Summierpunkt aufgeschaltet werden. In diesem Falle entsteht ein sog. "diversity Empfänger", d.h., das HF-Signal wird von zwei verschiedenen Standorten (Antennen) eingefangen. Dies hat neben der eigentlichen Funktion der Radzuordnung den zusätzlichen Vorteil der größeren Empfangssicherheit bei ungünstiger Lage des Senders zu einer Antenne (Feldauslöschung durch Reflexionen). In diesem Falle können beispielsweise mit einer geeigneten Auswerteeinrichtung, die zusätzlich zu dem Summierpunkt, dem Empfänger und der Multiplexerschaltung einen Mikroprozessor aufweist, nachstehende Funktionen ausgeführt werden:
- jede Antenne wird mit Hilfe der Multiplexerschaltung im Zeitmultiplexverfahren der Reihe nach hinsichtlich der jeweils anliegenden Feldstärke abgetastet;
- wird an einer Antenne eine empfangswürdige Feldstärke registriert, so wird diese Antenme selektiert;
- synchron zu jedem Datenbit wird je eine weitere der verbleibenden Antennen zugeschaltet;
- am Summierpunkt wird die gleichzeitig anliegende HF-Leistung von zwei Antennen summiert;
- durch Vergleich der Feldstärken ("A" und ("A + B")) wird festgestellt, an welcher Antenne (A oder B) die größere Feldstärke anliegt;
- für die nächste Bitperiode bleibt die stärkere Antenne (A oder B) als selektierte Antenne zugeschaltet;
- diese Schritte werden für die weiteren Antennen wiederholt, um schließlich diejenige Antenne zu selektieren, an welcher die größte Feldstärke anliegt.

Bei diesem Verfahren kann sich der Empfänger mit jeder Bitperiode an das maximale Empfangssignal herantasten, ohne dabei ein Datenbit zu verlieren, da ja die Empfangsverhältnisse mit jeder Selektion besser werden. Ist die stärkste Antenne einmal ermittelt, kann die resultierende Radzuordnung weiterhin verifiziert und korrigiert werden bis zum letzten Bit eines Funktelegramms Zu dieser weiteren Verifizierung kann auch das für jedes Rad und dessen Sender charakteristische Kennungssignal beitragen, mit dem jedes Funktelegramm vorzugsweise zusätzlich ausgestattet ist. Die Wahrscheinlichkeit einer Fehlinterpretation sinkt somit von Bit zu Bit innerhalb eines Funktelegramms und von einem Funktelegramm zum nächsten Funktelegramm. Mit einfachsten Mitteln wird so mit einer geringen Anzahl von Bauteilen und mit einer minimalen Anzahl von Funktelegrammen eine hohe Treffsicherheit bei der Zuordnung eines Funktelegrammes zu dem "sendenden Rad" erzielt.

Das vorstehend erläuterte Verfahren zur Selektierung der Antenne mit der größten Feldstärke kann während der gesamten Dauer eines Funktelegrammes durchgeführt werden. Vorzugsweise wird diese Selektierung jedoch nur während der Dauer des Synchronisiersignals eines Funktelegramms durchgeführt. Ein solches Synchronisiersignal kann beispielsweise 8 bis 16 Bits umfassen. Dieses Synchronisiersignal enthält noch keine Dateninformationen hinsichtlich der Nutzsignale. Selbst wenn einige Bits des Synchronisiersignals im Verlauf des Selektiervorganges verloren gehen, kann damit eine zutreffende Radzuordnung vorgenommen werden. In diesem Falle kann die Decodierung und Auswertung der Nutzsignale vorgenommen werden, nachdem die Zuordnung des Funktelegramms zu einem bestimmten Rad feststeht.

Nach einem weiteren gesichtspunkt der Erfindung ist vorgesehen, daß - nachdem die Zuordnung des Funktelegramms zu einem bestimmten Rad erfolgt ist -, während der nachfolgenden Decodierung und Auswertung des restlichen Teils dieses Funktelegramms, insbesondere während der Decodierung und Auswertung der Nutzsignale mehrere oder alle, vorzugsweise sämtliche Antennen gleichzeitig auf den Empfänger geschaltet werden. Hierdurch wird die Übertragungssicherheit ganz wesentlich gesteigert, denn mögliche Signalauslöschungen infolge der Radumdrehung an einer Antenne werden durch ungestörte Aufnahme des gleichen Funktelegramms an einer anderen Antenne kompensiert.

So kann nach einer bevorzugten Ausgestaltung vorgesehen sein, daß die Multiplexerschaltung zu einem gegebenen Zeitpunkt während des Empfangs eines Funktelegrammes nur einen einzigen Schalter oder nur zwei Schalter in den Durchlaßzustand versetzt und zu einem späteren Zeitpunkt während des Empfangs des gleichen Funktelegrammes gleichzeitig mehrere Schalter oder alle Schalter in den Durchlaßzustand versetzt.

Beispielsweise kann vorgesehen sein, daß die Multiplexerschaltung
- vor Eintreffen eines Funktelegrammes mehrere Schalter oder alle Schalter in den Durchlaßzustand versetzt;
- anschließend nach dem Eintreffen eines Funktelegrammes und während der Auswertung dessen Synchronisiersignales fortlaufend je einen Schalter in den Sperrzustand versetzt, bis die Antenne mit dem stärksten HF-Signal ermittelt ist; und
- daraufhin während des Empfangs des Nutzsignales dieses Funktelegrammes mehrere Schalter oder alle Schalter in den Durchlaßzustand versetzt, um so einen Mehrfachempfang dieses Nutzsignales über mehrere Antennen zu erzielen.

In diesem Falle werden während der Auswertung des Synchronisiersignales fortlaufend Antennen weggeschaltet, bis die Antenne mit der größten Feldstärke ermittelt ist.

Alternativ kann vorgesehen sein, daß die Multiplexerschaltung während der Übertragung eines Synchronisiersignales eines Funktelegrammes nacheinander nur jeweils einen einzigen Schalter oder nur zwei Schalter in den Durchlaßzustand versetzt, bis die Antenne mit der größten Feldstärke selektiert ist; und
die Multiplexerschaltung während der nachfolgenden Übertragung des Nutzsignales dieses Funktelegrammes mehrere Schalter oder alle Schalter in den Durchlaßzustand versetzt, um so einen Mehrfachempfang dieses Nutzsignales über mehrere Antennen zu erreichen.

Zur weiteren Erläuterung der Erfindung dient auch ein Schaltdiagramm, mit welchem schematisch der Aufbau eines erfindungsgemäß bevorzugten Mehrfachempfängers dargestellt ist.

Eine erfindungsgemäß bevorzugte Empfangs- und Auswerteeinrichtung kann beispielsweise einen Aufbau aufweisen, wie in dem einzigen Schaltdiagramm dargestellt. Für ein Fahrzeug, beispielsweise einen Pkw mit vier aktiven Rädern sind vier Empfangsantennen A, B, C, N vorgesehen. Von jeder Antenne A, B, C, N führt je eine Verbindungsleitung a, b, c, n zu einem Summierpunkt S. In jede Verbindungsleitung a, b, c, n ist eine als Schalter wirkende Diode oder ein als Schalter wirkender Transistor eingesetzt. Die Empfängs- und Auswerteeinrichtung ist mit einem Mikrocontroller versehen, der seinerseits mit einer Input-Multiplexerschaltung ausgerüstet ist. Vom Mikrocontroller führt je eine Steuerleitung a', b', c', n' zu der zugeordneten Verbindungsleitung a, b, c, n, um den jeweiligen Schalter anzusteuern und entweder in den Sperrzustand oder in den Durchlaßzustand zu versetzen. Somit kann der Mikrocontroller registrieren, welche Antenne zu einem gegebenen Zeitpunkt auf den Summierpunkt aufgeschaltet ist. Der Summierpunkt ist über ein Filter mit dem Empfänger verbunden. Mit Hilfe des Empfängers wird nicht nur das Funktelegramm demoduliert, sondern es wird auch die Feldstärke erfaßt, die zu einem bestimmten Zeitpunkt am Summierpunkt anliegt. Die anfänglich in analoger Form ermittelte Feldstärke wird mit Hilfe eines Analog/Digital-Wandlers in ein digitales Feldstärkesignal umgewandelt und dem Mikrocontroller zur Auswertung zugeführt. Weiterhin werden nach entsprechender Demodulierung die Nutzsignale über eine Datensignalleitung dem Mikrocontroller zugeführt und ausgewertet.

## Patentansprüche

1. Reifendruck-Überwachungseinrichtung für ein Fahrzeug mit mehreren Rädern, die je mit einem Luftreifen ausgerüstet sind, mit
- einer Signalerzeugungseinrichtung an jedem Rad, welche den Luftdruck im Luftreifen und gegebenenfalls die Reifentemperatur erfaßt und entsprechende elektrische Drucksignale bzw. Temperatursignale liefert;
- einer Sendeeinrichtung an jedem Rad, welche ein Funktelegramm erzeugt, das wenigstens ein Synchronisiersignal und wenigstens Nutzsignale entsprechend dem elektrischen Drucksignal und gegebenenfalls dem Temperatursignal enthält, und telemetrisch an Empfangsantennen übermittelt;
- je einer Empfangsantenne (A, B, C, ... N) pro Rad, die benachbart zum jeweiligen Rad ortsfest am Fahrzeug befestigt ist;
- einer ortsfest am Fahrzeug befestigten, zentralen Auswerteeinrichtung zur Auswertung der Funktelegramme, um einen Fahrzeugführer mit Informationen über den Zustand der verschiedenen Reifen zu versorgen;
- einem in die zentrale Auswerteeinrichtung integrierten oder mit dieser verknüpften Empfänger, der über je eine Verbindungsleitung (a, b, c, ... n), in die je ein Schalter eingesetzt ist, mit jeder Antenne (A, B, C, ... N) verbunden ist;
- einer dem Empfänger zugeordneten oder in die Auswerteeinrichtung integrierten Multiplexerschaltung, die diese Schalter im Zeitmultiplexverfahren betätigt;
dadurch gekennzeichnet, daß
durch Auswertung der vom Empfänger erfaßten Feldstärken eine Selektion derjenigen Antenne mit der größten Feldstärke erfolgt, wozu die Multiplexerschaltung
- vor Eintreffen eines Funktelegrammes mehrere Schalter oder alle Schalter in den Durchlaßzustand versetzt;
- anschließend nach dem Eintreffen eines Funktelegrammes und während der Auswertung dessen Synchronisiersignales fortlaufend je einen Schalter in den Sperrzustand versetzt, bis die Antenne mit der größten Feldstärke ermittelt ist; und
- daraufhin während des Empfangs des Nutzsignales dieses Funktelegrammes mehrere Schalter oder alle Schalter in den Durchlaßzustand versetzt, um so einen Mehrfachempfang dieses Nutzsignales über mehrere Antennen (A, B, C, ... N) zu erzielen, und
die Auswerteeinrichtung anhand dieser selektierten Antenne das Funktelegramm einem bestimmten Rad zuordnet, das sich benachbart zur selektierten Antenne befindet.

2. Reifendruck-Überwachungseinrichtung für ein Fahrzeug mit mehreren Rädern, die je mit einem Luftreifen ausgerüstet sind, mit
- einer Signalerzeugungseinrichtung an jedem Rad, welche den Luftdruck im Luftreifen und gegebenenfalls die Reifentemperatur erfaßt und entsprechende elektrische Drucksignale bzw. Temperatursignale liefert;
- einer Sendeeinrichtung an jedem Rad, welche ein Funktelegramm erzeugt, das wenigstens ein Synchronisiersignal und wenigstens Nutzsignale entsprechend dem elektrischen Drucksignal und gegebenenfalls dem Temperatursignal enthält, und telemetrisch an Empfangsantennen übermittelt;
- je einer Empfangsantenne (A, B, C, ... N) pro Rad, die benachbart zum jeweiligen Rad ortsfest am Fahrzeug befestigt ist;
- einer ortsfest am Fahrzeug befestigten, zentralen Auswerteeinrichtung zur Auswertung der Funktelegramme, um einen Fahrzeugführer mit Informationen über den Zustand der verschiedenen Reifen zu versorgen;
- einem in die zentrale Auswerteeinrichtung integrierten oder mit dieser verknüpften Empfänger, der über je eine Verbindungsleitung (a, b, c, ... n), in die je ein Schalter eingesetzt ist, mit jeder Antenne (A, B, C, .... N) verbunden ist;
- einer dem Empfänger zugeordneten oder in die Auswerteeinrichtung integrierten Multiplexerschaltung, die diese Schalter im Zeitmultiplexverfahren betätigt;
dadurch gekennzeichnet, daß
durch Auswertung der vom Empfänger erfaßten Feldstärken eine Selektion derjenigen Antenne mit der größten Feldstärke erfolgt, wozu die Multiplexerschaltung
- während der Übertragung eines Synchronisiersignales eines Eunktelegrammes nacheinander nur jeweils einen einzigen Schalter oder nur zwei Schalter in den Durchlaßzustand versetzt, bis die Antenne mit dem stärksten HF-Signal ermittelt ist; und
- während des Empfangs des Nutzsignales dieses Funktelegrammes mehrere Schalter oder alle Schalter in den Durchlaßzustand versetzt, um so einen Mehrfachempfang dieses Nutzsignales über mehrere Antennen (A, B, C, ... N) zu erreichen, und
die Auswerteeinrichtung anhand dieser selektierten Antenne das Funktelegramm einem bestimmten Rad zuordnet, das sich benachbart zur selektierten Antenne befindet.

3. Mehrfachempfänger für eine Reifendruck-Uberwachungseinrichtung nach Anspruch 1
gekennzeichnet durch:
- je eine Empfangsantenne (A, B, C, ... N) pro Rad, die benachbart zum jeweiligen Rad ortsfest am Fahrzeug befestigt ist, und die zum Empfang von HF-Funktelegrammen ausgelegt ist, die von einer Sendeeinrichtung am Rad abgestrahlt werden;
- eine orstfest im Fahrzeug befestigbare zentrale Auswerteeinrichtung zur Auswertung der Funktelegramme, um einen Fahrzeugführer mit Informationen über den Zustand der verschiedenen Reifen zu versorgen;
- einen in die zentrale Auswerteeinrichtung integrierten oder mit dieser verknüpften Empfänger, der über je eine Verbindungsleitung (a, b, c, ... n), in die je ein Schalter eingesetzt ist, mit jeder Antenne (A, B, C, ... N) verbunden ist;
- eine dem Empfänger zugeordnete oder in die Auswerteeinrichtung integrierte, diese Schalter im Zeitmultiplexverfahren betätigende Multiplexerschaltung, die
-- vor Eintreffen eines Funktelegrammes mehrere Schalter oder alle Schalter in den Durchlaßzustand versetzt;
-- anschließend nach dem Eintreffen eines Funktelegrammes und während der Auswertung dessen Synchronisiersignales fortlaufend je einen Schalter in den Sperrzustand versetzt, bis die Antenne mit der größten Feldstärke ermittelt ist; und
-- daraufhin während des Empfangs des Nutzsignales dieses Funktelegrammes mehrere Schalter oder alle Schalter in den Durchlaßzustand versetzt, um so einen Mehrfachempfang dieses Nutzsignales über mehrere Antennen (A, B, C, ... N) zu erzielen.

4. Mehrfachempfänger für eine Reifendruck-Überwachungseinrichtung nach Anspruch 2
gekennzeichnet durch:
- je eine Empfangsantenne (A, B, C, ... N) pro Rad, die benachbart zum jeweiligen Rad ortsfest am Fahrzeug befestigt ist, und die zum Empfang von HF-Funktelegrammen ausgelegt ist, die von einer Sendeeinrichtung am Rad abgestrahlt werden;
- eine orstfest im Fahrzeug befestigbare zentrale Auswerteeinrichtung zur Auswertung der Funktelegramme, um einen Fahrzeugführer mit Informationen über den Zustand der verschiedenen Reifen zu versorgen;
- einen in die zentrale Auswerteeinrichtung integrierten oder mit dieser verknüpften Empfänger, der über je eine Verbindungsleitung (a, b, c, ... n), in die je ein Schalter eingesetzt ist, mit jeder Antenne (A, B, C, ... N) verbunden ist;
- eine dem Empfänger zugeordnete oder in die Auswerteeinrichtung integrierte, diese Schalter im Zeitmultiplexverfahren betätigende Multiplexerschaltung, die
-- während der Übertragung eines Synchronisiersignales eines Funktelegrammes nacheinander nur jeweils einen einzigen Schalter oder nur zwei Schalter in den Durchlaßzustand versetzt, bis die Antenne mit dem stärksten HF-Signal ermittelt ist; und
-- während des Empfangs des Nutzsignales dieses Funktelegrammes mehrere Schalter oder alle Schalter in den Durchlaßzustand versetzt, um so einen Mehrfachempfang dieses Nutzsignales über mehrere Antennen (A, B, C, ... N) zu erreichen.

5. Einrichtung nach einem der Ansprüche 1 bis 4,
dadurch gekennzeichnet, daß das Funktelegramm ein HF-Signal ist, das mit einem Digitalsignal moduliert ist, das wenigstens ein Synchronisiersignal und wenigstens ein Nutzsignal aufweist und das wahlweise zusätzlich mit einer Kennung und/oder mit einer Prüfziffer versehen ist; und die Empfangsantennen (A, B, C, ... N) und der Empfänger für den Empfang solcher HF-Signale ausgelegt sind; und
die Auswerteeinrichtung für die Auswertung solcher Digitalsignale ausgelegt ist.

6. Einrichtung nach einem der Ansprüche 1 bis 5,
dadurch gekennzeichnet, daß
das Synchronisiersignal 8 bis 16 Bits umfaßt.

7. Einrichtung nach einem der Ansprüche 1 bis 6,
dadurch gekennzeichnet, daß
jeder Schalter als eine Diode ausgebildet ist.

8. Einrichtung nach einem der Ansprüche 1 bis 6,
dadurch gekennzeichnet, daß
jeder Schalter als ein Transistor ausgebildet ist.

9. Einrichtung nach einem der Ansprüche 1 bis 8,
dadurch gekennzeichnet, daß
jede Verbindungsleitung (a, b, c, .... n) nach dem Schalter auf einen gemeinsamen Summierpunkt (S) geschaltet ist.

10. Einrichtung nach Anspruch 9,
dadurch gekennzeichnet, daß
am Empfänger die im Summierpunkt gebildeten Feldstärken anliegen; und die am Empfänger anliegende Feldstärke mit Hilfe eines Analog/ Digital-Wandlers in ein digitales Feldstärkesignal umgeformt wird.

11. Einrichtung nach Anspruch 9 oder 10,
dadurch gekennzeichnet, daß
die Auswerteeinrichtung zusätzlich zu dem Summierpunkt (S), dem Empfänger und der Multiplexerschaltung einen Mikroprozessor aufweist, und
mit Hilfe dieser Komponenten nachstehende Funktionen ausgeführt werden:
- jede Antenne (A, B, C, ... N) wird der Reihe nach hinsichtlich der jeweils anliegenden Feldstärke abgetastet;
- wird eine empfangswürdige Feldstärke registriert, so wird diese Antenne (etwa A) selektiert;
- synchron zu jedem Datenbit wird je eine weitere der verbleibenden Antennen (B, C, ... oder N) zugeschaltet oder weggeschaltet;
- am Summierpunkt (S) wird die gleichzeitig anliegende HF-Leistung von zwei Antennen (etwa A + B) summiert;
- durch Vergleich der Feldstärken ("A" mit ("A + B")) wird festgestellt, an welcher Antenne (A oder B) die größere Felstärke anliegt;
- für die nächste Bitperiode bleibt die stärkere Antenne (A oder B) als selektierte Antenne zugeschaltet;
- diese Schritte werden für die weiteren Antennen (C, ... N) wiederholt, um schließlich diejenige Antenne zu selektieren, an welcher die größte Felstärke anliegt.

12. Einrichtung nach einem der Ansprüche 3 bis 11,
dadurch gekennzeichnet, daß
vier Empfangsantennen (A, B, C, ... N) vorhanden sind; und jede dieser Empfangsantennen einem aktiven Rad eines Pkw zugeordnet ist.

## Claims

1. A tire pressure monitoring device for a vehicle having several wheels wherein each wheel is provided with a pneumatic tire, comprising
- a signal generating device at each wheel sensing the air pressure within the pneumatic tire and, if desired, additionally the tire temperature and providing corresponding electric pressure signals and optionally corresponding electric temperature signals;
- a transmitter means at each wheel generating a radiogram comprising at least a synchronizing signal and at least control signals corresponding to the electric pressure signal and optionally control signals corresponding to the electric temperature signal for telemetric transmission of said radiogram to receiving antennas;
- each a receiving antenna (A, B, C, ... N) per wheel arranged stationarely at the vehicle structure adjacent to the attributed wheel;
- a central evaluation means arranged stationarely at the vehicle structure for evaluating the radiograms in order to provide a vehicle driver with informations regarding the condition of the different tires;
- a receiver integrated into or connected with said central evaluation means and connected with each receiving antenna (A, B, C, ... N) via each a connecting line (a, b, c, ... n) wherein each a switch is inserted into each connecting line (a, b, c, ... n);
- a multiplexer circuit attributed to said receiver or integrated within said evaluation means and actuating said switches according to a time-controlled multiplex method;
characterized in, that
performing a selection of that receiving antenna comprising the highest field strength by evaluating the field strenghts detected by the receiver, whereto the multiplexer circuit
- transfers several switches or all switches into an ON-state before a radiogram has been received;
- then continuously transfers one switch after the other into an OFF-state after the arrival of a radiogram and during the evaluation of its synchronizing signal until the receiving antenna comprising the highest field strength has been determined; and
- then transfers several switches or all switches into the ON-state during the subsequent reception of the control signal of this same radiogram thus providing a multi-path reception of this control signal via several receiving antennas (A, B, C, ... N); and
the evaluating means uses the thus selected receiving antenna in order to attribute this radiogram to this specific wheel arranged adjacent to the thus selected receiving antenna.

2. A tire pressure monitoring device for a vehicle having several wheels wherein each wheel is provided with a pneumatic tire, comprising
- a signal generating device at each wheel sensing the air pressure within the pneumatic tire and, if desired, additionally the tire temperature and providing corresponding electric pressure signals and optionally corresponding electric temperature signals;
- a transmitter means at each wheel generating a radiogram comprising at least a synchronizing signal and at least control signals corresponding to the electric pressure signal and optionally control signals corresponding to the electric temperature signal for telemetric transmission of said radiogram to receiving antennas;
- each a receiving antenna (A, B, C,... N) per wheel arranged stationarely at the vehicle structure adjacent to the attributed wheel;
- a central evaluation means arranged stationarely at the vehicle structure for evaluating the radiograms in order to provide a vehicle driver with informations regarding the condition of the different tires;
- a receiver integrated into or connected with said central evaluation means and connected with each receiving antenna (A, B, C, ... N) via each a connecting line (a, b, c, ... n)
wherein each a switch is inserted into each connecting line (a, b, c, ... n);
- a multiplexer circuit attributed to said receiver or integrated within said evaluation means and actuating said switches according to a time-controlled multiplex method;
characterized in, that
performing a selection of that receiving antenna comprising the highest field strength by evaluating the field strengths detected by the receiver,
whereto the multiplexer circuit
- transfers one after the other only one single switch or only two switches into an ON-state during the transmission of a synchronizing signal of a radiogram until the receiving antenna comprising the highest field strength has be determined; and
- then transfers several switches or all switches into the ON-state during the subsequent reception of the control signal of this same radiogram thus providing a multi-path reception of this control signal via several receiving antennas (A, B, C, ... N); and the evaluating means uses the thus selected receiving antenna in order to attribute this radiogram to this specific wheel arranged adjacent to the thus selected receiving antenna.

3. A multi-path receiver device for a tire pressure monitoring device according to claim 1,
characterized by:
- each a receiving antenna (A, B, C, ... N) per wheel arranged stationarily at the vehicle structure adjacent to this wheel and enabled for the reception of RF radiograms telemetrically transmitted from a transmitter means at a wheel;
- a central evaluation means stationarely fastenable at the vehicle structure for evaluating the radiograms in order to provide a vehicle driver with informations regarding the condition of the different tires;
- a receiver integrated into or connected with the central evaluation means and connected with each receiving antenna (A, B, C, ... N) via each a connecting line (a, b, c, ... n), wherein each a switch is inserted into each connecting line (a, b, c, ... n);
- a multiplexer circuit attributed to said receiver or integrated within said evaluating means and actuating said switches according to a time-controlled multiplex method, whereby said multiplexer circuit
- transfers several switches or all switches into an ON-state before a radiogram has been received;
- then continuously transfers one switch after the other into an OFF-state after the arrival of a radiogram and during the evaluation of its synchronizing signal until the receiving antenna comprising the highest field strength has been determined; and
- then transfers several switches or all switches into the ON-state during the subsequent reception of the control signal of this same radiogram thus obtaining a multi-path reception of this control signal via several receiving antennas (A, B, C, ... N).

4. A multi-path receiver device for a tire pressure monitoring device according to claim 2,
characterized by:
- each a receiving antenna (A, B, C, ... N) per wheel arranged stationarily at the vehicle structure adjacent to said wheel and enabled for the reception of RF radiograms telemetrically transmitted from a transmitter means at a wheel;
- a central evaluation means stationarely fastenable at the vehicle structure for evaluating the radiograms in order to provide a vehicle driver with informations regarding the condition of the different tires;
- a receiver integrated into or connected with the central evaluation means and connected with each receiving antenna (A, B, C, ... N) via each a connecting line (a, b, c, ... n), wherein each a switch is inserted into each connecting line (a, b, c, ... n);
- a multiplexer circuit attributed to the receiver or integrated within said evaluating means and actuating said switches according to a time-controlled multiplex method, whereby said multiplexer circuit
- transfers one after the other only one single switch or only two switches into an ON-state during the transmission of a synchronizing signal of a radiogram until the receiving antenna comprising the highest field strength has be determined; and
- then transfers several switches or all switches into the ON-state during the subsequent reception of the control signal of this same radiogram thus obtaining a multi-path reception of this control signal via several receiving antennas (A, B, C, ... N).

5. The device accoring to anyone of the claims 1 to 4,
characterized in, that
the radiogram is an RF signal modulated with a digital signal comprising at least a synchronizing signal and at least a control signal and optionally comprising an identification code or signal and/or a check digit; and
both, the receiving antennas (A, B, C, ... N) and the receiver being enabled for the reception of said RF signals; and
the evaluation means being enabled for the evaluation of said digital signals.

6. The device according to anyone of the claims 1 to 5,
characterized in, that
said synchronizing signal comprises 8 to 16 bits.

7. The device according to anyone of the claims 1 to 6,
characterized in, that
each switch comprises a diode means.

8. The device according to anyone of the claims 1 to 6,
characterized in, that
each switch comprises a transistor means.

9. The device according to anyone of the claims 1 to 8,
characterized in, that each connecting line (a, b, c, ... n) is connected to a common summing junction (S) behind the switch.

10. The device according to claim 9,
characterized in, that the field strengths formed at the summing junction (S) are applied to the receiver; and the field strength present at the receiver is converted into a digital field strength signal by means of an analog-digital converter.

11. The device according to claim 9 or 10,
characterized in, that
the evaluation means comprises a micro-processor in addition to the summing junction (S), the receiver and the multiplexer circuit; and the following functions are performed by means of these components:
- each antenna (A, B, C, ... N) is scanned one after the other with respect to the field strength present at a specific receiving antenna (A, B, C, ... N);
- if a field strength worth to be received is registered at a specific receiving antenna, than this receiving antenna (for example A) is selected;
- in synchronization with each data bit, a further antenna of the residual receiving antennas (B, C, ... or N) is connected with or shut off;
- at the summing junction (S) a simultaneously fed RF power of two receiving antennas (for example A + B) is added up;
- it is determined by a comparison of the field strengths ("A" with ("A + B") which receiving antenna (A or B) comprises the higher field strength;
- with respect to the next following bit period the stronger receiving antenna (A or B) remains in the connected ON-state as the selected receiving antenna;
- these steps are repeated for the other receiving antennas (C, ... N) in order to finally select that specific receiving antenna comprising the highest field strength.

12. The device according to anyone of the claims 3 to 11,
characterized in, that
four receiving antennas (A, B, C, ... N) are available; and each one of these receiving antennas is attributed to an active wheel of a passenger car.

## Revendications

1. Dispositif de surveillance de pression des pneus pour un véhicule avec plusieurs roues, qui sont équipées chacune d'un bandage pneumatique comprenant
- un dispositif de génération de signaux sur chaque roue, qui détecte la pression de pneu et éventuellement la température du pneu et émet des signaux de pression respectivement des signaux de température électriques correspondants ;
- un dispositif émetteur sur chaque roue qui génère un radiotélégramme qui comprend au moins un signal de synchronisation et au moins des signaux utiles en fonction du signal électrique de pression et éventuellement du signal de température et les transmet télémétriquement aux antennes de réception ;
- une antenne de réception (A, B, C,...N) par roue qui est fixée solidaire au véhicule à proximité de la roue considérée ;
- un dispositif central fixé solidaire au véhicule pour l'analyse des radiotélégrammes pour fournir au conducteur du véhicule des informations sur l'état des différents bandages pneumatiques ;
- un récepteur intégré ou relié au dispositif central d'analyse qui est relié à chaque antenne (A, B, C,... N) par une ligne de liaison (a, b, c, ..n) dans laquelle est placée un interrupteur ;
- un circuit multiplexeur intégré dans le dispositif d'analyse ou associé au récepteur qui active ces interrupteurs dans le procédé de multiplexage par répartition dans le temps ;
caractérisé en ce que
par l'analyse des intensités de champ saisies par le récepteur il s'effectue une sélection de l'antenne avec la plus forte intensité de champ, le circuit multiplexeur
- transposant plusieurs ou tous les interrupteurs à l'état passant avant l'arrivée d'un radiotélégramme ;
- transposant un interrupteur à l'état de verrouillage après l'arrivée d'un radiotélégramme et pendant l'analyse du signal de synchronisation en continu jusqu'à ce que l'antenne avec la plus grande intensité de champ soit déterminée ; et
- transposant ensuite pendant la réception du signal utile de ce radiotélégramme plusieurs interrupteurs ou tous les interrupteurs à l'état passant pour obtenir ainsi une réception multiple de ce signal utile par plusieurs antennes (A, B, C, ... N), et
en ce que le dispositif d'analyse associe à l'aide de cette antenne sélectionnée le radiotélégramme à une roue définie qui se trouve à proximité de l'antenne sélectionnée.

2. Dispositif de surveillance de pression des pneus pour un véhicule avec plusieurs roues, qui sont équipées chacune d'un bandage pneumatique comprenant
- un dispositif de génération de signaux sur chaque roue, qui détecte la pression de pneu et éventuellement la température du pneu et émet des signaux de pression respectivement des signaux électriques de température correspondants ;
- un dispositif émetteur sur chaque roue qui génère un radiotélégramme qui comprend au moins un signal de synchronisation et au moins des signaux utiles en fonction du signal électrique de pression et éventuellement du signal de température et les transmet télémétriquement aux antennes de réception ;
- une antenne de réception (A, B, C,...N) par roue qui est fixée solidaire au véhicule à proximité de la roue considérée ;
- un dispositif central fixé solidaire au véhicule pour l'analyse des radiotélégrammes pour fournir au conducteur du véhicule des informations sur l'état des différents bandages pneumatiques ;
- un récepteur intégré ou relié au dispositif central d'analyse qui est relié à chaque antenne (A, B, C, ... N) par une ligne de liaison (a, b, c, ..n) dans laquelle est placé un interrupteur ;
- un circuit multiplexeur intégré dans le dispositif d'analyse ou associé au récepteur qui active ces interrupteurs dans le procédé de multiplexage par répartition dans le temps ;
caractérisé en ce que
par l'analyse des intensités de champs saisies par le récepteur, il s'effectue une sélection de l'antenne avec la plus forte intensité de champ, le circuit multiplex
- transposant à l'état passant un seul ou uniquement deux interrupteurs l'un après l'autre pendant la transmission d'un signal de synchronisation d'un radiotélégramme, jusqu'à ce que l'antenne avec le signal HF le plus fort soit déterminée ; et
- transposant plusieurs interrupteurs ou tous les interrupteurs à l'état passant pendant la réception du signal utile de ce radiotélégramme pour obtenir une réception multiple de ce signal utile par plusieurs antennes (A, B, C ... N), et
en ce que le dispositif d'analyse associe à l'aide de cette antenne sélectionnée le
radiotélégramme à une roue définie qui se trouve à proximité de l'antenne sélectionnée.

3. Récepteur multiple pour un dispositif de surveillance de pression de pneu selon la revendication 1, caractérisé par :
- une antenne de réception (A, B, C, .. N) par roue qui est fixée solidairement au véhicule à proximité de la roue considérée et qui est prévue pour la réception de radiotélégrammes HF qui sont émis par un dispositif émetteur sur la roue ;
- un dispositif central fixé solidaire au véhicule pour l'analyse des radiotélégrammes pour fournir au conducteur du véhicule des informations sur l'état des différents bandages pneumatiques;
- un récepteur intégré ou relié au dispositif central d'analyse qui est relié à chaque antenne (A, B, C,... N) par une ligne de liaison (a, b, c, ..n) dans laquelle est placé un interrupteur ;
- un circuit multiplexeur intégré dans le dispositif d'analyse ou associé au récepteur et activant ces interrupteurs dans le procédé de multiplexage par répartition dans le temps, circuit qui
- transpose plusieurs ou tous les interrupteurs à l'état passant avant l'arrivée d'un radiotélégramme ;
- transpose un interrupteur à l'état de verrouillage après l'arrivée d'un radiotélégramme et pendant l'analyse du signal de synchronisation en continu jusqu'à ce que l'antenne avec la plus grande intensité de champ soit déterminée ; et
- transpose ensuite pendant la réception du signal utile de ce radiotélégramme plusieurs interrupteurs ou tous les interrupteurs à l'état passant pour obtenir ainsi une réception multiple de ce signal utile par plusieurs antennes (A, B, C, ... N).

4. Récepteur multiple pour un dispositif de surveillance de pression de pneu selon la revendication 1, caractérisé par :
- une antenne de réception (A, B, C, .. N) par roue qui est fixée solidairement au véhicule à proximité de la roue considérée et qui est prévue pour la réception de radiotélégrammes HF qui sont émis par un dispositif émetteur sur la roue ;
- un dispositif central fixé solidaire au véhicule pour l'analyse des radiotélégrammes pour fournir au conducteur du véhicule des informations sur l'état des différents bandages pneumatiques ;
- un récepteur intégré ou relié au dispositif central d'analyse qui est relié à chaque antenne (A, B, C, ... N) par une ligne de liaison (a, b, c, ..n) dans laquelle est placé un interrupteur ;
- un circuit multiplexeur intégré dans le dispositif d'analyse ou associé au récepteur et activant ces interrupteurs dans le procédé de multiplexage par répartition dans le temps, circuit qui
-- transpose à l'état passant un seul ou uniquement deux interrupteurs l'un après l'autre pendant la transmission d'un signal de synchronisation d'un radiotélégramme, jusqu'à ce que l'antenne avec le signal HF le plus fort soit déterminée ; et
-- transpose plusieurs interrupteurs ou tous les interrupteurs à l'état passant pendant la réception du signal utile de ce radiotélégramme pour obtenir une réception multiple de ce signal utile par plusieurs antennes (A, B, C ... N).

5. Dispositif selon l'une des revendications 1 à 4,
caractérisé en ce que
le radiotélégramme est un signal HF, qui est modulé avec un signal numérique qui présente au moins un signal de synchronisation et au moins un signal utile et qui est doté au choix en supplément d'une identification et/ou un chiffre de contrôle ; en ce que les antennes de réception (A, B,, C,... N) et le récepteur sont prévus pour la réception de tels signaux HF, et le dispositif d'analyse est prévu pour l'analyse de tels signaux numériques.

6. Dispositif selon l'une des revendications 1 à 5, caractérisé en ce que le signal de synchronisation comporte 8 à 16 bits.

7. Dispositif selon l'une des revendications 1 à 5, caractérisé en ce que chaque interrupteur est conçu comme une diode.

8. Dispositif selon l'une des revendications 1 à 6, caractérisé en ce que chaque interrupteur est conçu comme un transistor.

9. Dispositif selon l'une des revendications 1 à 8, caractérisé en ce que chaque ligne de liaison (a, b, c, ... n) est placée après l'interrupteur sur un point cumulatif commun (S).

10. Dispositif selon la revendication 9, caractérisé en ce que les intensités de champ formées au point cumulatif s'appliquent sur le récepteur et en ce que les intensités de champ se trouvant sur le récepteur sont converties en un signal numérique d'intensité de champ à l'aide du convertisseur analogique/numérique.

11. Dispositif selon la revendication 9 ou 10, caractérisé en ce que le dispositif d'analyse présente en plus du point cumulatif (S), du récepteur et du circuit multiplexeur, un microprocesseur et en ce qu'à l'aide de ces composants, les fonctions suivantes sont exécutées :
- chaque antenne (A, B, C, ... N) est balayée les unes après les autres selon l'intensité de champ en présence ;
- si une intensité de champ notable est enregistrée, cette antenne (env. A) est sélectionnée ;
- en synchronisation avec chaque bit de données, l'une des antennes restantes (B, C, ... N)est intégrée ou exclue ;
- au point cumulatif (S) la puissance HF simultanée de deux antennes (env. A + B) est cumulée ;
- par comparaison des champs d'intensité ("A" avec ("A + B"), il est constaté sur quelle antenne (A ou B) se trouve la plus forte intensité de champ ;
- pour la période de bits suivante, l'antenne la plus forte (A ou B) reste sélectionnée ;
- ces étapes sont répétées pour les autres antennes (C, ... N) pour sélectionner l'antenne où se trouve la plus forte intensité de champ.

12. Dispositif selon l'une des revendications 3 à 11, caractérisé en ce que quatre antennes de réception (A, B, C,... N) sont prévues ; et chacune de ces antennes de réception est associée à une roue active d'un véhicule particulier.
